# EUROPEAN PATENT SPECIFICATION

(11) **EP 0 461 718 B1**
(45) Date of publication and mention of the grant of the patent: **17.01.1996**
(21) Application number: 91201416.4
(22) Date of filing: 07.06.1991
(51) Int. Cl.: A23P 1/14

(54) **Process for puffing vegetables, tuberous plants and pulses, and the puffed vegetables, tuberous plants and pulses obtained**
Verfahren zum Puffen von Gemüse, Knollengewächsen und Hülsenfrüchten und die so hergestellten gepufften Gemüse, Knollengewächse und Hülsenfrüchte
Procédé pour gonfler des légumes, plantes tuberculeuses, et légumes à gousses et légumes, plantes tuberculeuses et légumes gonflées obtenues

(30) Priority: 12.06.1990 NL 9001325
(43) Date of publication of application: 18.12.1991
(73) Proprietor: Dalgety Food Ingredients B.V., 4814 NN Breda (NL)
(72) Inventor: Van Kranenburg, Simon, NL-4266 GC EETHEN (NL)
(74) Representative: de Bruijn, Leendert C.

(56) References cited:
- EP-A- 0 089 800
- FR-A- 1 427 396
- US-A- 3 500 552
- US-A- 3 555 992
- FOOD TECHNOLOGY, vol. 26, no. 12, December 1972, pages 23-30; G.E. BROWN et al.: "Centrifugal fluidized bed. Blanches, dries, and puffs piece-form foods"
- FOOD SCIENCE & TECHNOLOGY ABSTRACTS, no.80-10-J1515 (80054636); K.S. JAYARAMAN et al.: "Development of quick-cooking dehydrated pulses by high temperature short time pneumatic drying",& JOURNAL OF FOOD TECHNOLOGY, vol. 15, no. 2, p. 217-226 (1980)
- DERWENT FILE SUPPLIER WPIL, 1987, AN=87-357476, Derwent Publications Ltd,London, GB; & HU-A-43 455 (F. BERKI)

## Description

The invention relates to a process for puffing vegetables, tuberous plants and pulses, and to the puffed vegetables, tuberous plants and pulses obtained.

Such a process is known from Food Technology 52 (February 1984). Explosion puffing is used in a hot air dehydration process at a moisture content between 15 and 35%, depending on the device. Such a moisture content occurs in the initial stages of the after-drier, where drying still takes place relatively quickly. Partially dried pieces of food, for example potatoes with a moisture content of 25 wt.-%, are taken out of the drier, puffed and then conveyed back to the drier, in order to lower the moisture content to a percentage which makes storage readily possible. As a result of the porosity which is produced in the explosion puffing, drying of these pieces of food is accelerated by comparison with ordinary drying with hot air. This results in a reduction of at least 40% in the drying time. The momentary change in pressure which occurs when the water evaporates does not damage the pieces and does not even break the cell. This emerges clearly from the texture of the rehydrated food. The rehydration of the product obtained is improved by this method.

In explosion puffing the partially dried (15 to 35 wt.-% moisture) pieces of food are conveyed into a puffing chamber which is brought to a predetermined pressure. The pressure is developed externally by heating with gas and/or internally by superheated steam. While the pressure is increased the water in the pieces of food is brought to above atmospheric boiling point by increasing the temperature. The sudden reduction in pressure of the chamber then causes the superheated water suddenly to become steam, as a result of which a porous structure is produced. Such a process is used on many types of vegetables and fruit. Advantages are the rapid hydration and also the good texture, colour and flavour. These properties remain even with long storage if the products are packed at 3.3°C.

Explosion puffing does not work in the natural or raw state because the particles then actually disintegrate during the puffing. At a specific pressure for the product, limits are found for the moisture content at which a porous structure is created without disintegration of the pieces of food. A strong correlation seems to be present between the moisture content and the pressure applied.

A process for drying and explosion puffing is also described in "Lebensm. Wiss. u. Techn.", 16, 27-31 (1983). This article describes the drying in a fluidized bed of food products ranging from pre-cooked rice to diced potatoes and carrots. Such products with coarse dimensions and sticky particles make a conventional device unsuitable for holding in a fluidized bed. According to this process it is, however, possible to carry out such a treatment by mixing the pieces of food with inert particles, for example glass balls. The plant used can give an excess pressure of 0.4 bar. This process achieves good results both with rice and with potatoes, but good results are not obtained with carrots. It is stated that it is virtually impossible to puff carrots to an increased volume. This is attributed to the fibrous structure of the carrots.

Documents "Food Technology, vol. 26, no. 12, Dec. 1972, pages 23-30, G.E. Brown et al.", EP-A-0 089 800 and "Food Science Abstracts, no. 80-10-31515 (8005463), K.S. Sayaraman et al." disclose puffing processes that improve the rehydration properties of the obtained products.

A process of the type described in the introduction which leads to a better result and in which it is also possible to puff a difficult product such as carrots without the presence of inert objects has now been found. This process is characterised in that the vegetables, tuberous plants and/or pulses are puffed after drying on a belt drier. The product to be puffed should expediently first be blanched and/or pre-soaked or steamed. The process according to the invention is particularly suitable for use on carrot slices, potato slices or potato cubes, pieces of celeriac, brown haricot beans, white haricot beans, green peas, yellow peas, red beans, kidney beans and lentils.

Pre-drying leads to the formation of a dense surface layer which becomes porous during puffing, but does not lead to irregular formation and does not cause poor rehydration either. The drying time is, of course, dependent on the product to be dried and the moisture content. In general, 15 to 25 minutes' pre-drying with air at 90 to 130°C is suitable for carrots. The pre-dried product is then heated for 30 to 90 sec. with air at 165 to 185°C, causing the product to puff. If the process is carried out at a lower temperature, the carrots do not puff, and at a higher temperature the carrots discolour. If the treatment is of shorter duration than 30 sec., the carrots do not puff, and if it is for longer than 80 sec., the carrots become tough or discolour. The higher the moisture content of the pieces, the more intensive the treatment needed, and a broader working range can be selected. In the case of products other than carrots, the suitable temperature and time can be established on the basis of simple experiments.

It must be ensured that the pre-treatment in the belt drier is not too intensive. If this heating is too intensive at high temperature, the correct puffing effect is not achieved and the product obtained often has insufficient rehydration capacity.

For the puffing of carrots a minimum moisture content must be present for each cut. For carrots it is, for example, 15 wt.-%.

In the case of a cut of 2 mm or thinner it becomes difficult to achieve a good puffing effect.

In order to achieve a good keeping quality, the product can be after-dried. In general, such a treatment, which is known per se, is carried out at 50 - 60°C to an end moisture content of maximum 6 wt.-%.

It must also be ensured that a pre-dried product which has been stored for several hours before going into the puffing zone is given a shorter treatment and/or is treated at a lower temperature. This is due to migration of the moisture over the whole particle. A storage period also benefits the homogeneity of the product to be puffed. The moisture content of the product to be puffed can in fact vary as a result of the position on the belt drier. A product in the centre can have a different moisture content from one at the edge. Storage means that moisture migrates and a homogeneous product is obtained. The cause of uneven moisture distribution can lie, inter alia, in uneven product distribution over the width of the belt or in non-homogeneous air circulation.

Puffing is expediently carried out in a so-called jet zone or in a fluidized bed drier.

The product obtained according to the invention can be distinguished from the known products visually or under a stereomicroscope. In the case of the known products craters can be seen in the surface, while in the product according to the invention there is little or no sign of such craters. The moisture has obviously in this case become more diffused through the wall or has disappeared through microscopically small holes, while this has also led to a structure which gives a slightly more blown-up impression (probably through a more uniform expansion of the moisture during the evaporation).

Finally, it is pointed out that with such a treatment in a fluidized bed approximately 20 - 40% of the moisture present evaporates (see Example VI). When used on an industrial scale, this can fall to approximately 15%.

### Examples I-VIII

### The puffing of carrots.

Carrots of the Karotan variety were used in this series of experiments. Cleaned and steam-peeled (treatment with hot steam and then brushing) carrots were cut, blanched and conveyed to the belt drier. After drying for 15-25 minutes at 100-130°C, samples were taken at various points from the belt drier. The following cuts were tested: 6x6x3 mm, 6x6x6 mm, 10x10x2 mm, 10x10x8 mm, 16x16x1.5 mm, 16x16x2 mm, 16x16x5 mm. Through taking the product out of the belt drier at various points, various moisture contents of these cuts were tested.

The experiments were carried out in a LAB batch unit jet zone of Sluis at Drachten. Unless otherwise stated, the jet zone was set as follows:
- diameter of tubes 9.25 mm
- the air velocity was set by means of the discharge valve and the fan in such a way that an air pressure difference corresponding to 7.6 cm water column was achieved at the outlet of the tubes. Temperatures of 120°C to 200°C were applied. The time varied between 10 and 120 seconds. The actual temperature can deviate a few degrees from the set value. After the treatment in the jet zone, the product was after-dried in a drying cabinet to a moisture content of 6 wt.-%. Approximately 75 grammes of product was used per batch.

The products were assessed in the following manner. The product was first assessed for discolouring (must not occur) and for adequate puffing of the pieces. The visually good samples of the 6x6x3 mm, 6x6x6 mm, 10x10x2 mm and 10x10x8 mm cuts were tested in a cooking experiment. This experiment was as follows for the first three cuts:
150 ml boiling water was added to 5.0 g product. It was tested after 3 - 5 minutes.

The 10x10x8 mm cut was treated as follows: 5.0 g product was placed in 250 ml cold water and brought to the boil. It was tested after 5 minutes' boiling.

In the testing, particular attention was paid to whether the product was done and to whether any hard pieces were present in the product. The product was assessed relative to a reference sample.

### Example I

### Carrots cut 6x6x3 mm

The processing conditions applied were:
- blanching and drying
- diameter of tubes (of the jet zone) 9.25 mm
- air velocity and discharge valve were set as in Example I
- 75 g per batch
This cut was compared in the cooking experiment with an explosion puffed carrot cube 6x6x6 mm.

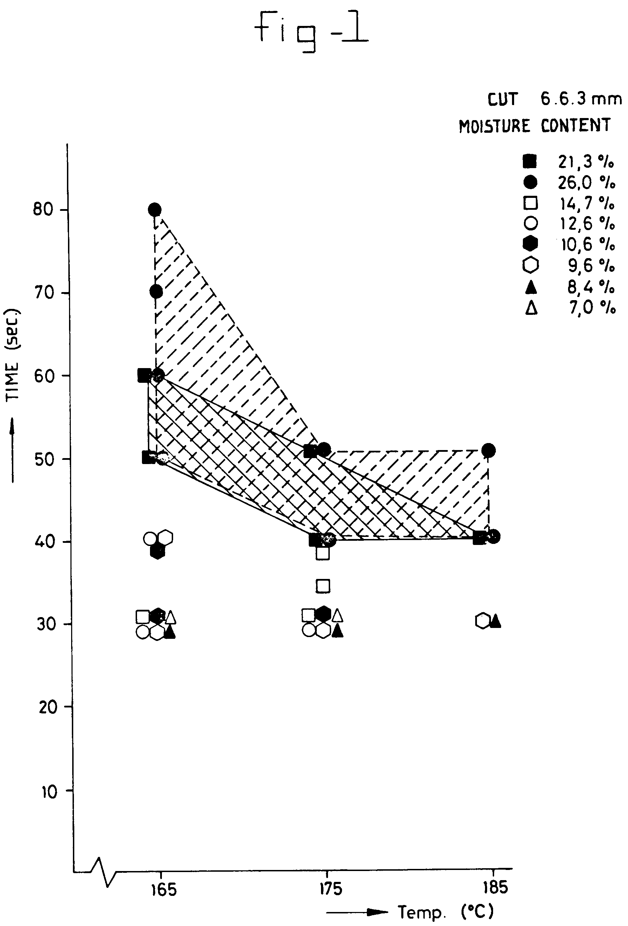

The following samples were rated good here; see Table A and Fig. 1. The hatched parts are those areas within which good products were obtained according to visual and organoleptic assessments.

**Table A**

| Moisture content wt.-% | Temperature °C | Time sec. |
|---|---|---|
| 26.0 | 185 | 40 |
| 26.0 | 185 | 50 |
| 26.0 | 175 | 40 |
| 26.0 | 175 | 50 |
| 26.0 | 165 | 50 |
| 26.0 | 165 | 60 |
| 26.0 | 165 | 70 |
| 26.0 | 165 | 80 |
| 21.3 | 185 | 40 |
| 21.3 | 175 | 40 |
| 21.3 | 175 | 50 |
| 21.3 | 165 | 50 |
| 21.3 | 165 | 60 |

The samples with the following moisture contents did not produce any good product at all: 7.0, 8.4, 9.6, 10.6, 12.6 and 14.7 wt.-%. It follows from this that the lower limit of the range where the product can be puffed is between 15 and 20 wt.-% moisture for this cut.

The workable temperature lies between 165°C and 185°C. The suitable time duration varies between 40 and 80 seconds.

### Example II

### Carrots cut 6x6x6 mm

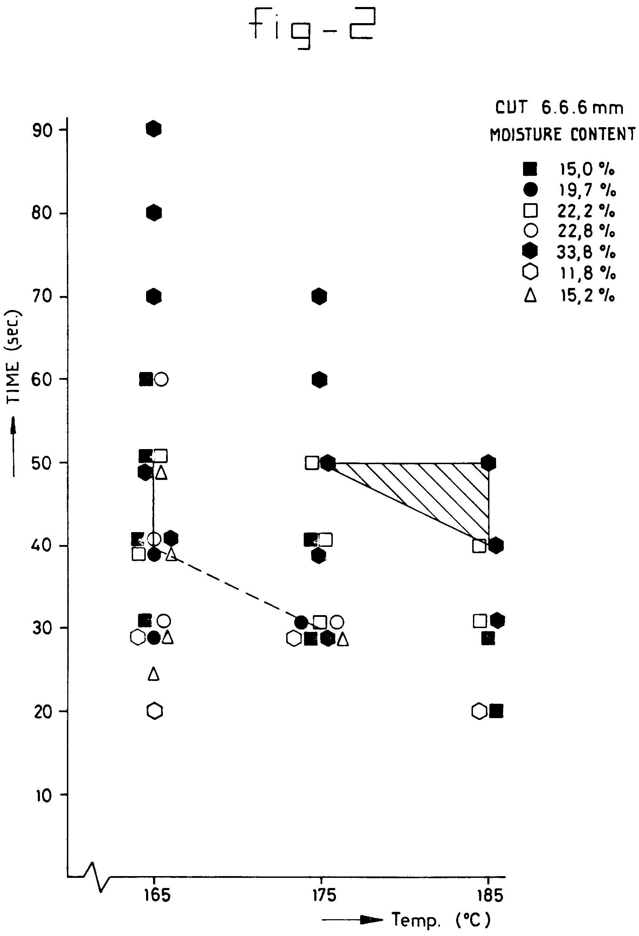

The processing conditions applied were:
- blanching and drying
- diameter of tubes (of the jet zone) 9.25 mm
- air velocity and discharge valve were set as described in Example I
- 75 g per batch
This cut was compared in the cooking experiment with a sample of explosion puffed carrots of 1/4 x 1/4 x 1/4 inch. The following samples were rated good here; see Table B and Fig. 2.

**Table B**

| Moisture content wt.-% | Temperature °C | Time sec. |
|---|---|---|
| 33.8 | 185 | 40 |
| 33.8 | 185 | 50 |
| 33.8 | 175 | 50 |
| 22.8 | 165 | 40 |
| 22.8 | 165 | 50 |
| 22.2 | 165 | 60 |
| 19.7 | 175 | 30 |
| 19.7 | 165 | 40 |
| 15.0 | 165 | 40 |

The samples with 11.7 to 15.0 wt.-% moisture in general did not produce a good product. Samples with a moisture content from 15.0 wt.-% sometimes produced a good product. It follows from this that the limit should not be drawn too sharply, but that there is a small region in which it is difficult to make a good product. This boundary region lies between 15% and 20% moisture.

For this cut a moisture content of ≧ 22 wt.-% was therefore preferred.

The workable temperatures lie between 165°C and 185°C. The suitable time varies between 30 and 60 seconds.

### Example III

### Carrots cut 10x10x2 mm

The processing conditions applied were:
- blanching and drying
- diameter of tubes (of the jet zone) 9.25 mm
- air velocity and discharge valve were set as described in Example I
- 75 grammes per batch
This cut was tested in the cooking experiment with an explosion puffed 10x10x2 sample.

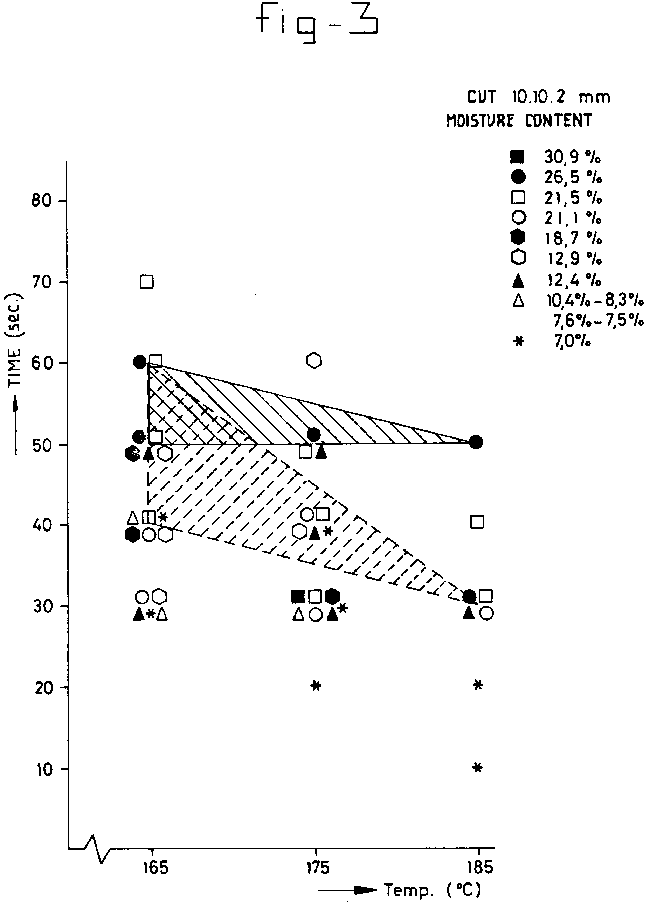

The following samples were rated good here; see Table C and Fig. 3.

**Table C**

| Moisture content wt.-% | Temperature °C | Time sec. |
|---|---|---|
| 30.9 | 175 | 40 |
| 30.9 | 175 | 60 |
| 26.5 | 185 | 50 |
| 26.5 | 175 | 50 |
| 26.5 | 165 | 50 |
| 26.5 | 165 | 60 |
| 21.5 | 185 | 30 |
| 21.5 | 165 | 40 |
| 21.5 | 165 | 50 |
| 21.5 | 165 | 60 |
| 18.7 | 165 | 40 |

The samples with the following moisture contents did not give a single good product: 7.0, 7.5, 7.6, 8.3, 10.4, 12.4, 12.9 and 21.1 wt.-%.

The samples with moisture content of 21.5 wt.-% produced four good products. It follows from this that the lower limit for this cut lies around 21 wt.-% moisture.

The workable temperature lies between 165°C and 185°C.

The suitable time varies between 30 and 60 seconds.

### Example IV

### Carrots cut 10x10x8 mm

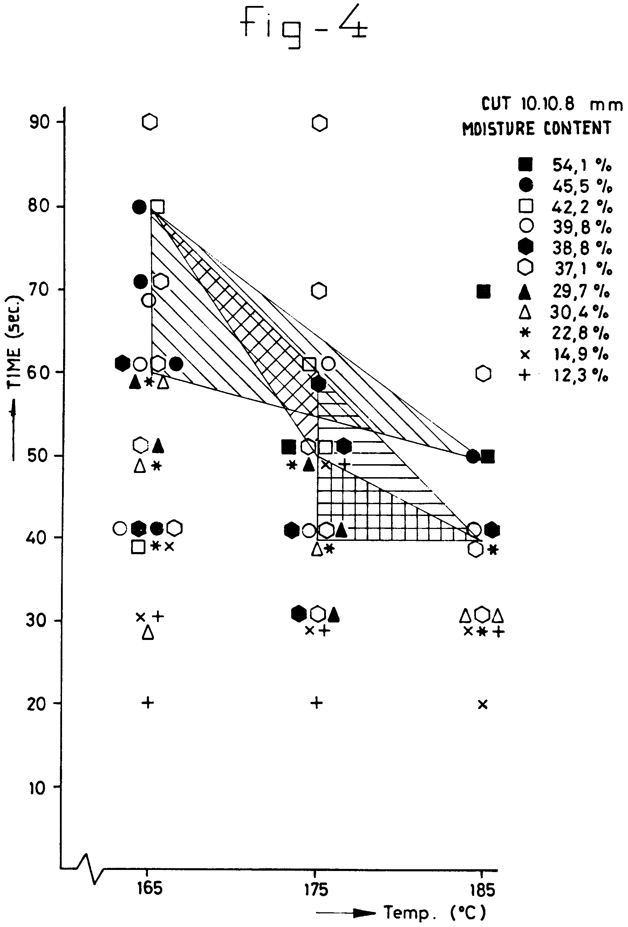

The processing conditions applied were:
- blanching and drying
- diameter of tubes (of the jet zone) 9.25 mm
- air velocity and discharge valve were set as in Example I
- 75 g per batch
This cut was compared with a sample of explosion puffed carrots 10x10x10 mm. The following samples were visually and organoleptically rated good and withstood the cooking test well (see Table D and Fig. 4).

**Table D**

| Moisture content wt.-% | Temperature °C | Time sec. |
|---|---|---|
| 54.1 | 185 | 70 |
| 45.5 | 185 | 50 |
| 45.5 | 165 | 60 |
| 45.5 | 165 | 70 |
| 45.5 | 165 | 80 |
| 42.2 | 175 | 50 |
| 42.2 | 175 | 60 |
| 42.2 | 165 | 80 |
| 39.8 | 185 | 40 |
| 39.8 | 175 | 40 |
| 39.8 | 175 | 60 |
| 38.8 | 175 | 50 |
| 37.1 | 185 | 40 |
| 37.1 | 175 | 40 |
| 37.1 | 175 | 50 |
| 29.7 | 165 | 40 |

The samples with moisture content 12.3, 14.9 and 22.8 wt.-% did not produce a good result.

It follows from this that the lower limit for the moisture content for this cut lies between 23 and 30 wt.-%.

The workable temperature varies between 165°C and 185°C.

The suitable time duration lies between 40 and 80 seconds.

### Example V

### Carrots cut 16x16x1.5 mm

The processing conditions applied were:
- blanching and drying
- diameter of tubes 9.25 mm
- air velocity and discharge valve were set as described in Example I
- 50 g per batch
The following samples were rated good visually; see Table E.

**Table E**

| Moisture content wt.-% | Temperature °C | Time sec. |
|---|---|---|
| 22.2 | 185 | 30 |
| 22.2 | 165 | 60 |
| 16.4 | 175 | 30 |
| 16.4 | 165 | 40 |

### Example VI

Carrots with a cut of 16 x 16 x 1.5 mm with a moisture content of 22.2 wt.-% were taken from the belt drier in the way described earlier, stored at room temperature for 24 hours and then puffed.

The following samples were rated good visually; see Table F.

**Table F**

| Moisture content wt.-% | Temperature °C | Time sec. |
|---|---|---|
| 22.2 | 175 | 30 |
| 22.2 | 165 | 40 |

It was found that samples with a moisture content of 16.4 wt.-% no longer puffed well.

It follows from this experiment that, if a sample is left lying for a longer period after drying, the heating must be less intensive (thus lower temperature and/or shorter treatment).

### Reduction in moisture content through treatment in jet zone

The average moisture loss was calculated for various cuts by determining moisture contents of samples before and after treatment in the jet zone. A summary of these is given in Table G.

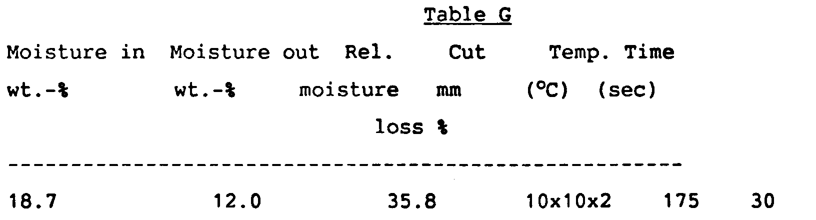

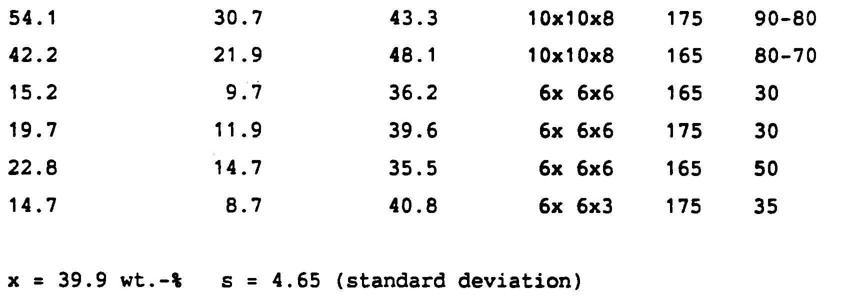

On average about 40% of the original moisture evaporates (n = 7).

### Example VIII

Puffing of carrots on an industrial scale.

In these experiments carrots of the variety Karotan were used. Cleaned, steam-peeled carrots were cut, blanched and conveyed to the belt drier. After drying for 45 minutes at 80-110°C and for 20 minutes at 50 - 75°C, the material was conveyed to the jet zone. The following cuts were tested: 10x10x2 mm, 20x20x4 mm, 10x10x8 mm, 6x6x6 mm, and 6x6x3 mm.

The experiments were carried out in an industrial jet zone of Sluis at Drachten. The jet zone was set as follows:

| | |
|---|---|
| air temperature | 150 - 180°C |
| pressure of the air tubes | 90 - 130 mm water column |
| vibrating conveyor | 299 - 316 rpm, in such a way that the residence time lay between 20 and 70 seconds |

After the treatment in the jet zone the product was conveyed back into the belt drier and after-dried to a moisture content of 6 wt.-%.

The samples obtained were all rated good in the cooking experiment.

### Example IX

### Puffing of potatoes

Cleaned potatoes were peeled, cut to 10x10x8 mm, blanched, sulphited so that 50 ppm SO₂ was present in the fresh product, and conveyed to the belt drier. The sample was dried for 45 minutes at 90 - 110°C. Another sample was after-dried for a further 2 hours at 75°C.

The experiments were carried out in a LAB batch unit of Sluis at Drachten. The jet zone was set as follows:
- diameter of tubes (of the jet zone) 9.25 mm
- air velocity was set by means of a fan and discharge valve in such a way that an air pressure difference corresponding to 1.5 kPa was achieved at the end of the tubes.
- 150 grammes per batch
Temperatures of 165°C to 185°C were applied. The time varied between 30 and 90 seconds. After the treatment in the jet zone, the product was after-dried in a drying cabinet to a moisture content of 6 wt.-%. The products were assessed as follows. The product was first assessed for discolouring (must not occur) and whether the pieces were puffed sufficiently.

The visually good samples were tested in a cooking experiment. The experiment was as follows: 5.0 grammes of product was placed in 250 ml of cold water and brought to the boil. After 10 minutes of cooking, it was tested. In the testing particular attention was paid to whether it was done and whether any hard pieces were present in the product.

The following samples were rated good here:
see Table I.

**Table I**

| Moisture contact wt.-% | Temperature °C | Time sec. |
|---|---|---|
| 44.3 | 185 | 45 |
| 44.3 | 185 | 50 |
| 44.3 | 185 | 60 |
| 44.3 | 175 | 45 |
| 44.3 | 175 | 60 |
| 44.3 | 175 | 75 |
| 44.3 | 165 | 60 |
| 44.3 | 165 | 70 |
| 44.3 | 165 | 80 |
| 44.3 | 165 | 90 |
| 25.4 | 185 | 40 |
| 25.4 | 175 | 50 |
| 25.4 | 165 | 50 |

The workable temperature lies between 165°C and 185°C. The suitable time duration varies between 40 and 90 seconds.

### Example X

Cleaned potatoes were peeled, cut to 6x6x30 mm, blanched, sulphited and conveyed to the belt drier. The samples were dried for 45 minutes at 90 - 110°C. If necessary, they were further dried at 75°C.

The experiments were carried out in a LAB batch unit of Sluis at Drachten. The jet zone was set as follows:
- diameter of tubes 9.25 mm
- air velocity was set by means of fan and discharge valve in such a way that an air pressure difference corresponding to 1.5 kPa was achieved at the ends of the tubes.
- 150 g per batch
Temperatures of 165°C to 185°C were applied. The time varied between 30 and 90 seconds.

After the treatment in the jet zone, the product was after-dried in a drying cabinet to a moisture content of 6 wt.-%.

The products were assessed as follows. The products were first assessed for discolouring (must not occur) and whether the pieces were puffed sufficiently.

The visually good samples were tested in a cooking experiment. The experiment was as follows: 5.0 g of product was placed in 250 ml of cold water and brought to the boil. After 7 minutes of cooking, it was tested. In the testing particular attention was paid to whether it was done and whether any hard pieces were present in the product.

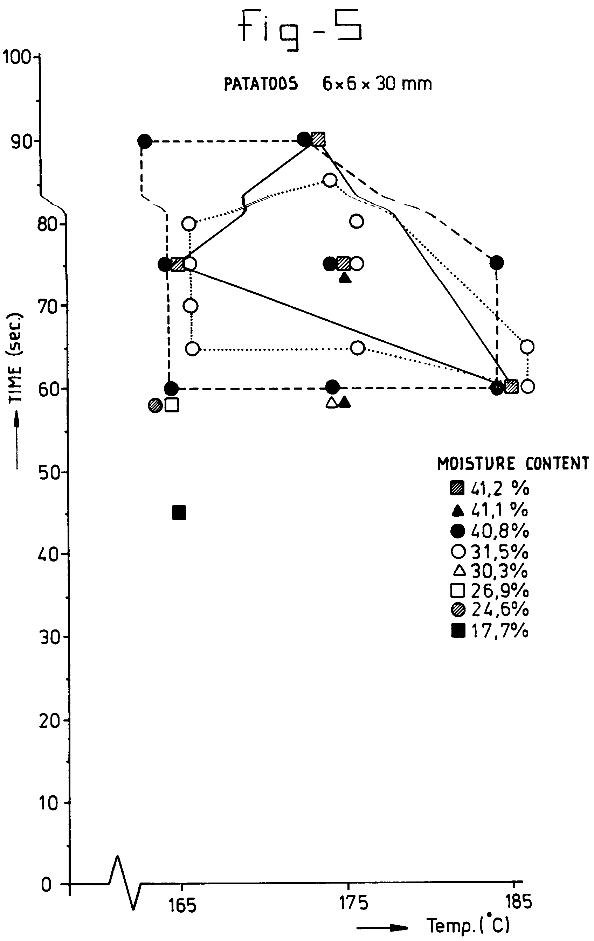

The following samples were rated good in this case. See Table J and Figure 5. They give the correlation between time, temperature and moisture content for a potato cut of 6 x 6 x 30 mm.

**Table J**

| Moisture content wt.-% | Temperature °C | Time Air sec. | pressure |
|---|---|---|---|
| 41.2 | 165 | 75 | 1.5 kPa |
| | 175 | 75 | 1.5 kPa |
| | 175 | 90 | 1.5 kPa |
| | 185 | 60 | 1.5 kPa |
| 41.1 | 175 | 60 | 1.5 kPa |
| | 175 | 75 | 1.5 kPa |
| 40.8 | 165 | 60 | 1.5 kPa |
| | 165 | 76 | 1.5 kPa |
| | 165 | 90 | 1.5 kPa |
| | 175 | 60 | 1.5 kPa |
| | 175 | 75 | 1.5 kPa |
| | 175 | 90 | 1.5 kPa |
| | 185 | 60 | 1.5 kPa |
| | 185 | 75 | 1.5 kPa |
| 31.5* | 165 | 65 | 1 kPa |
| | 165 | 70 | 1 kPa |
| | 165 | 75 | 1 kPa |
| | 165 | 80 | 1 kPa |
| | 175 | 65 | 1 kPa |
| | 175 | 75 | 1 kPa |
| | 175 | 80 | 1 kPa |
| | 175 | 85 | 1 kPa |
| | 185 | 60 | 1 kPa |
| | 185 | 65 | 1 kPa |
| 30.3 | 175 | 60 | 1.5 kPa |
| 26.9 | 165 | 60 | 1.5 kPa |
| 24.6 | 165 | 60 | 1.5 kPa |
| 17.7 | 165 | 45 | 1.5 kPa |

| | | | |
|---|---|---|---|
| * Tested at air pressure of 1kPa | | | |

The samples with the following moisture content did not produce a single good result: 13.9%, 17.4% and 21.7%.

It follows from this that the lower limit for the moisture content for this cut lies around 20%.

The workable temperature varies between 165°C and 185°C.

The suitable time duration lies between 45 and 90 seconds.

### Example XI

### Puffing celeriac

The washed and peeled tubers were cut to blocks of 8x8x6 mm and after blanching and sulphiting they were pre-dried on a drying kiln.
After pre-drying they were puffed in a LAB-batch-unit.
After puffing the samples were dried in a drying box to a moisture content of 6 wt.-%.
After drying they were visually evaluated and subjected to a cooking test.

| Process conditions used: | |
|---|---|
| Blanching | 4 - 7 minutes |
| Pre-drying | 30 - 45 minutes 80°C |

| Jetzone | |
|---|---|
| Puffing temperature | 165 - 185°C |
| Puffing time | 30 - 90 seconds |
| Diameter of the tubes | 9.25 mm |
| Pressure on the air pipes | 1 - 1.5 Kpa |
| Drying | 10 hours 50°C |
| Cooking test | 5 g in 250 ml of cold tap water. The water was brought to boiling and boiled for 5 minutes. After 5 minutes the test was evaluated and especially judged for hard parts. |

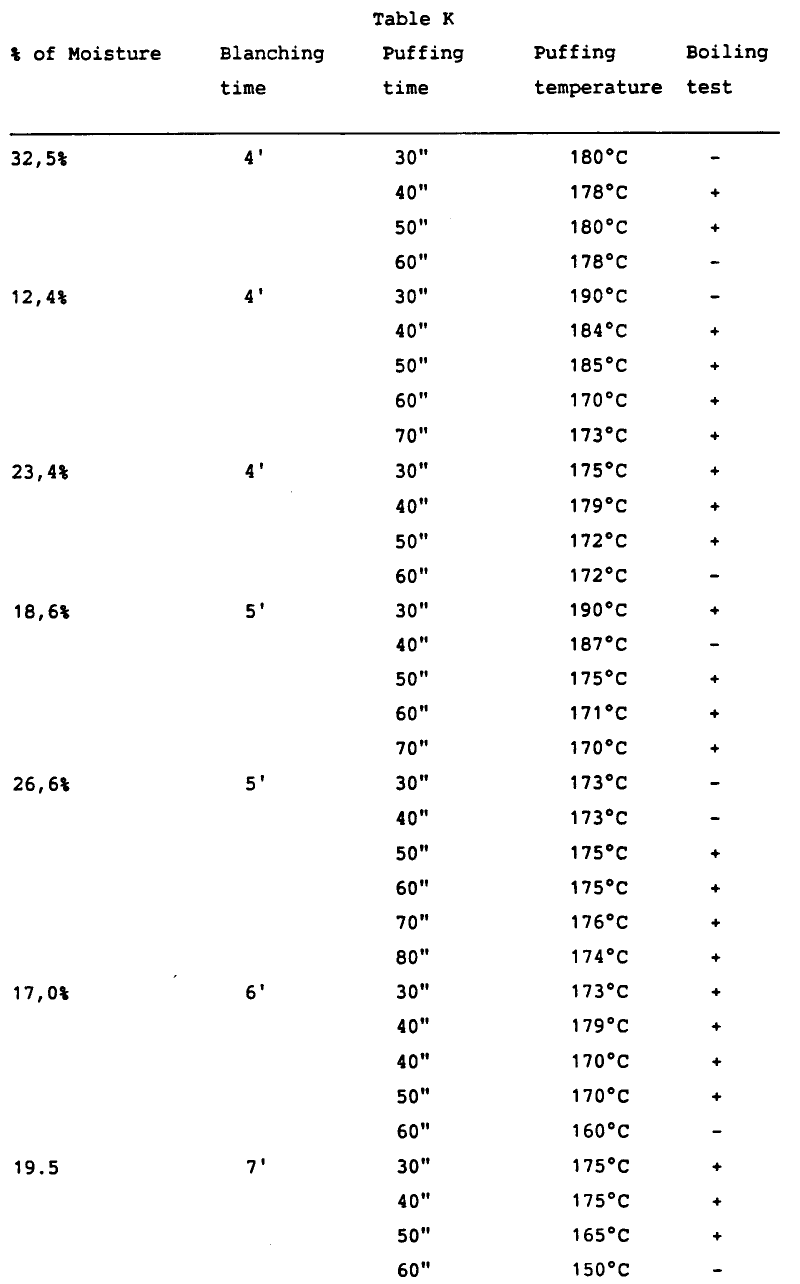

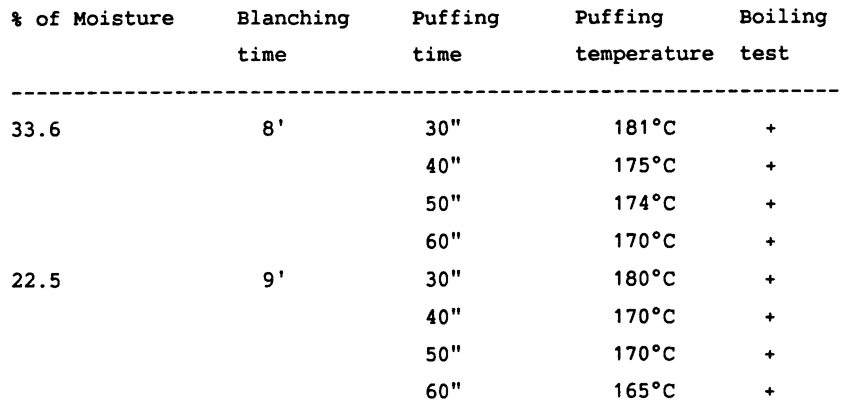

The lower limit of the moisture content for this cut is about 15% of water.

A suited temperature is between 165°C and 190°C, preferably between 170° and 180°C and a preferred residence time is between 30 and 80 seconds.

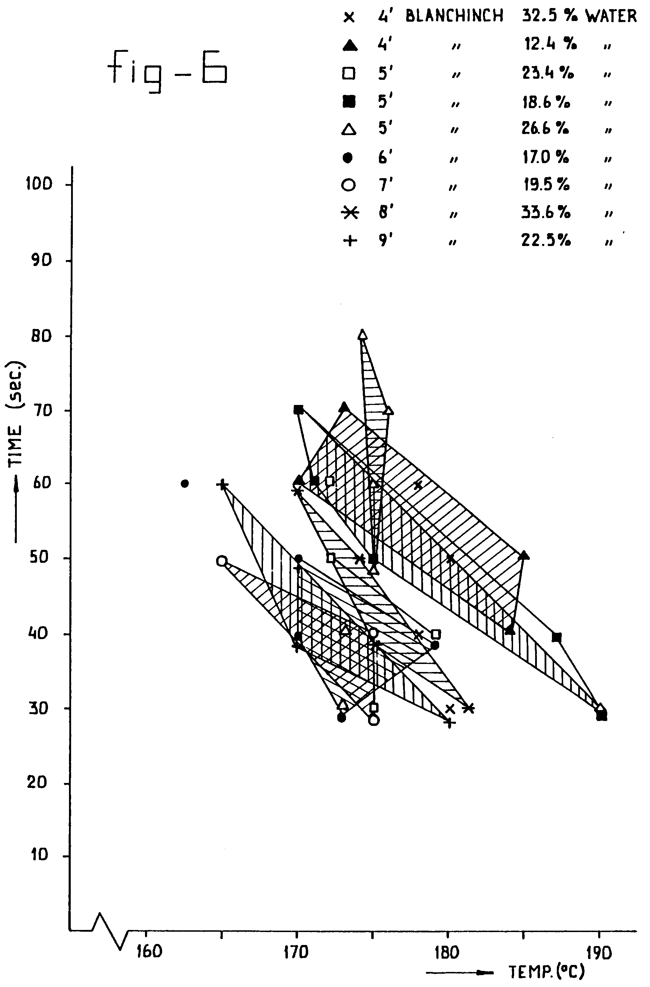

The results obtained are illustrated in fig. 6.

## Claims

1. A process for puffing vegetables and tuberous plants by subjecting the product to be puffed to a pre-drying step, said pre-drying step being followed by a puffing step carried out at a temperature of 165 to 185°C during a time between 30-90 seconds.

2. A process according to claim 1, wherein the puffing step is carried out in a fluidized bed or jet zone drier.

3. A process according to claim 1 or 2, wherein the puffing step is carried out with air.

4. A process according to any of the preceding claims, wherein the product is potato slices or cubes.

5. A process according to any of claims 1-3, wherein the vegetable is a carrot.

6. A process according to any of claims 1-3, wherein the tuberous plant is celeriac.

7. A process according to claim 5 wherein the pre-drying step results in a product with a moisture content higher than 15%.

8. A process according to any of the preceding claims, wherein the product to be treated has a cut with a thickness of more than 2 mm.

## Patentansprüche

1. Verfahren zum Puffen Von Gemüse und Knollengewächsen, wobei man das zu puffende Produkt einem Vortrocknungs-Schritt unterzieht und dem Vortrocknungs-Schritt ein Schritt des Puffens folgt, der durchgeführt wird bei einer Temperatur von 165 bis 185 °C während einer Zeit von 30 bis 90 Sekunden.

2. Verfahren nach Anspruch 1, worin der Schritt des Puffens in einem Fließbett oder in einem Düsenzonen-Trockner durchgeführt wird.

3. Verfahren nach Anspruch 1 oder 2, worin der Schritt des Puffens mit Luft durchgeführt wird.

4. Verfahren nach einem der vorhergehenden Ansprüche, worin das Produkt Kartoffel in Scheiben oder Würfel ist.

5. Verfahren nach einem der Ansprüche 1 bis 3, worin das Gemüse eine Karotte ist.

6. Verfahren nach einem der Ansprüche 1 bis 3, worin das Knollengewächs Knollensellerie ist.

7. Verfahren nach Anspruch 5, worin der Vortrocknungs-Schritt zu einem Produkt mit einem Feuchtigkeitsgehalt über 15 % führt.

8. Verfahren nach einem der vorhergehenden Ansprüche, worin das zu behandelnde Produkt einen Schnitt mit einer Dicke von mehr als 2 mm aufweist.

## Revendications

1. Procédé pour gonfler des légumes et des plantes tubéreuses en soumettant le produit à gonfler à une étape de préséchage, ladite étape de préséchage étant suivie d'une étape de gonflage effectuée à une température de 165 à 185 °C pendant une durée de 30 à 90 secondes.

2. Procédé selon la revendication 1, dans lequel l'étape de gonflage est effectuée dans un séchoir à lit fluidisé ou à zone de jet.

3. Procédé selon la revendication 1 ou 2, dans lequel l'étape de gonflage est effectuée avec de l'air.

4. Procédé selon l'une quelconque des revendications précédentes, dans lequel le produit est une pomme de terre en tranches ou en cubes.

5. Procédé selon l'une quelconque des revendications 1 à 3, dans lequel le légume est une carotte.

6. Procédé selon l'une quelconque des revendications 1 à 3, dans lequel la plante tubéreuse est le céleri-rave.

7. Procédé selon la revendication 5, dans lequel l'étape de préséchage aboutit à un produit ayant une teneur en humidité supérieure à 15 %.

8. Procédé selon l'une quelconque des revendications précédentes, dans lequel le produit à traiter est coupé à une épaisseur de plus de 2 mm.
